# EUROPEAN PATENT APPLICATION

(11) **EP 4 089 841 A1**
(43) Date of publication of application: **16.11.2022**
(21) Application number: 21752942.9
(22) Date of filing: 09.02.2021
(51) Int. Cl.: H01Q 19/06, H01Q 15/00, H01Q 3/24, H01Q 21/00

(54) **ANTENNA APPARATUS**

(30) Priority: 14.02.2020 CN 202010093674
(71) Applicant: Huawei Technologies Co., Ltd., Shenzhen, Guangdong 518129, (CN)
(72) Inventor: DU, Mingde, Shenzhen, Guangdong 518129 (CN)
(74) Representative: Körber, Martin Hans
(86) International application number: PCT/CN2021/076170
(87) International publication number: WO 2021/160110

(57) **Abstract**

Embodiments of this application disclose an antenna apparatus, applied to the communications field. Embodiments of this application include: A feed converts a guided electromagnetic wave into a beam, and then sends the beam to a defocusing apparatus. Then, the defocusing apparatus may change a transmission direction of the beam. In this way, the defocusing apparatus sends the beam whose transmission direction is changed to a beam shaping panel, and the beam shaping panel changes the transmission direction of the beam and a transmission shape of the beam, and then transmits the beam to a peer antenna, to implement information transmission. The defocusing apparatus changes the transmission direction of the beam, so that a spatial distance between feeds may be increased, feed arrangement density may be reduced, and a case in which physical positions of the feeds overlap may be avoided, to properly arrange the feeds and ensure a communication effect.

## Description

This application claims priority to Chinese Patent Application No. 202010093674.6, filed with China National Intellectual Property Administration on February 14, 2020 and entitled "ANTENNA APPARATUS", which is incorporated herein by reference in its entirety.

### TECHNICAL FIELD

Embodiments of this application relate to the communications field, and in particular, to an antenna apparatus.

### BACKGROUND

An antenna apparatus (antenna) is also referred to as an antenna for short, and is a type of converter. The antenna can convert a guided electromagnetic wave propagated on a transmission line into an electromagnetic wave propagated in an unbounded medium, or the antenna can convert an electromagnetic wave propagated in an unbounded medium into a guided electromagnetic wave propagated on a transmission line. The antenna is a component, in a radio device, for transmitting or receiving an electromagnetic wave. Engineering systems, for example, radio communication, broadcasting, television, radar, navigation, electronic countermeasure, remote sensing, and radio astronomy, that transfer information by using the electromagnetic wave work by using the antenna.

A feed (feed) is a basic component of the antenna apparatus, and is a primary radiator of the antenna apparatus. One antenna apparatus may include a plurality of feeds. The feed can convert a high-frequency current or a bound electromagnetic wave into radiated electromagnetic wave energy. The radiated electromagnetic wave energy is a beam. Some antenna apparatuses may implement beam switching. The antenna apparatus may control, by using a switch, the feed that transmits a beam. When the switch is closed, the feed may transmit a beam. The beam may be used to transfer information.

To ensure beam continuity, a device provider needs to reduce a distance between feeds. Each feed needs to occupy specific physical space. When there is excessively high feed arrangement density, physical positions of the feeds overlap. Consequently, the feeds cannot be properly arranged, and a communication effect is affected.

### SUMMARY

Embodiments of this application provide an antenna apparatus, and the antenna apparatus includes a defocusing apparatus. The defocusing apparatus changes a transmission direction of a beam, so that a spatial distance between feeds may be increased, feed arrangement density may be reduced, and a case in which physical positions of the feeds overlap may be avoided, to properly arrange the feeds and ensure a communication effect.

According to a first aspect of this application, an antenna apparatus is provided. The antenna apparatus includes a power division network, a first switch, a first feed, a defocusing apparatus, and a beam shaping panel. The defocusing apparatus includes a first interface and a second interface. A first end of the power division network is connected to a transceiver channel, and a second end is connected to a first end of the first switch. A second end of the first switch is connected to the first feed. The defocusing apparatus is disposed between the first feed and the beam shaping panel. The transceiver channel inputs a guided electromagnetic wave to the power division network, and when the first switch is in a closed state, the guided electromagnetic wave is input to the first feed by using the power division network and the first switch. After the guided electromagnetic wave is input to the first feed, the first feed outputs a first beam, the first beam is transmitted to the first interface, an intersection point of the first beam and the first interface is a first incident point, on the defocusing apparatus, a direction perpendicular to a tangential direction at the first incident point is a first normal direction, and an included angle between the first beam and the first normal direction is a first angle. After the first beam is introduced into the first interface of the defocusing apparatus, a second beam appears in the defocusing apparatus because of refraction, an included angle between the second beam and the first normal direction is a second angle, and the second angle is less than the first angle. The second beam is transmitted to the second interface, an intersection point of the second beam and the second interface is a first radiation point, a direction perpendicular to a tangential direction at the first radiation point is a second normal direction, and an included angle between the second beam and the second normal direction is a third angle.

After the second beam is introduced into the second interface, the second beam passes through the second interface and is refracted to form a third beam, an included angle between the third beam and the second normal direction is a fourth angle, and the third angle is less than the fourth angle. The third beam is transmitted to the beam shaping panel, and the beam shaping panel changes a transmission direction of the third beam and a transmission shape of the beam, and then transmits the beam to a peer antenna, to implement information transmission.

In this embodiment of this application, the feed converts a guided electromagnetic wave into a beam, and then sends the beam to the defocusing apparatus, and then the defocusing apparatus may change a transmission direction of the beam. In this way, the defocusing apparatus sends the beam whose transmission direction is changed to the beam shaping panel, and the beam shaping panel changes the transmission direction of the beam and a transmission shape of the beam, and then transmits the beam to the peer antenna, to implement information transmission. The defocusing apparatus changes the transmission direction of the beam, so that a spatial distance between feeds may be increased, feed arrangement density may be reduced, and a case in which physical positions of the feeds overlap may be avoided, to properly arrange the feeds and ensure a communication effect.

In a possible implementation of the first aspect, in the antenna apparatus, the defocusing apparatus is an equivalent concave lens, the first interface is parallel to the second interface, a thickness at an edge position of the defocusing apparatus is the same as a thickness at a central position of the defocusing apparatus, and a refractive index gradually decreases from the edge position to the central position.

In this possible implementation, the defocusing apparatus is an equivalent concave lens, and the first interface and the second interface of the equivalent concave lens are parallel to each other. In comparison with a defocusing apparatus such as a common concave lens, machining difficulty is reduced.

In a possible implementation of the first aspect, the defocusing apparatus includes different materials from the edge position to the central position, and refractive indices of the materials included from the edge position of the defocusing apparatus to the central position of the defocusing apparatus gradually decrease.

In this possible implementation, a specific implementation of the equivalent concave lens is provided, thereby improving implementability of the solution.

In a possible implementation of the first aspect, the defocusing apparatus includes a same material from the edge position to the central position, the material in the defocusing apparatus includes a hole, and density of the hole included in the material included from the edge position of the defocusing apparatus to the central position of the defocusing apparatus gradually decreases.

In this possible implementation, a specific implementation of the equivalent concave lens is provided, thereby improving implementability of the solution.

In a possible implementation of the first aspect, the defocusing apparatus includes a same material from the edge position to the central position, the material in the defocusing apparatus includes a hole, and an aperture of the hole included in the material included from the edge position of the defocusing apparatus to the central position of the defocusing apparatus gradually decreases.

In this possible implementation, a specific implementation of the equivalent concave lens is provided, thereby improving implementability of the solution.

In a possible implementation of the first aspect, the defocusing apparatus is a concave lens, the defocusing apparatus includes a same material from an edge position to a central position, and a thickness of the defocusing apparatus gradually decreases from the edge position to the central position.

In this possible implementation, a specific implementation of the equivalent concave lens is provided, thereby improving implementability of the solution.

In a possible implementation of the first aspect, the beam shaping panel is a convex lens, and the convex lens converges beams transmitted to the convex lens, and then transmits the beams to the peer antenna apparatus.

In this possible implementation, a specific implementation of the beam shaping panel is provided, thereby improving implementability of the solution.

In a possible implementation of the first aspect, the beam shaping panel is a paraboloid, and the paraboloid reflects a beam transmitted to the paraboloid to the peer antenna apparatus.

In this possible implementation, a specific implementation of the beam shaping panel is provided, thereby improving implementability of the solution.

According to a second aspect of this application, an antenna apparatus is provided. The antenna apparatus includes a power division network, a first switch, a first feed, a defocusing apparatus, and a beam shaping panel. The defocusing apparatus includes a first interface and a second interface. A first end of the power division network is connected to a transceiver channel, and a second end is connected to a first end of the first switch. A second end of the first switch is connected to the first feed. The defocusing apparatus is disposed between the first feed and the beam shaping panel. When the beam shaping panel receives a fourth beam sent by a peer antenna apparatus, the beam shaping panel changes a transmission direction of the fourth beam, and the beam shaping panel transmits the fourth beam to the second interface. After the fourth beam is transmitted to the second interface, an intersection point of the fourth beam and the second interface is a second incident point, on the defocusing apparatus, a direction perpendicular to a tangential direction at the second incident point is a third normal direction, and an included angle between the fourth beam and the third normal direction is a fifth angle. After the fourth beam is introduced into the second interface, a fifth beam appears in the defocusing apparatus because of refraction, an included angle between the fifth beam and the third normal direction is a sixth angle, and the sixth angle is less than the fifth angle. The fifth beam is transmitted to the first interface, an intersection point of the fifth beam and the first interface is a second radiation point, a direction perpendicular to a tangential direction at the second radiation point is a fourth normal direction, and an included angle between the fifth beam and the fourth normal direction is a seventh angle. After the fifth beam is introduced into the first interface, the fifth beam passes through the first interface and is refracted to form a sixth beam, an included angle between the sixth beam and the fourth normal direction is an eighth angle, and the seventh angle is less than the eighth angle. When the first switch is in a closed state, the sixth beam is transmitted to the feed, and after receiving the sixth beam, the feed converts the sixth beam into a guided electromagnetic wave, and transmits the guided electromagnetic wave to the power division network by using the first switch.

In a possible implementation of the second aspect, in the antenna apparatus, the defocusing apparatus is an equivalent concave lens, the first interface is parallel to the second interface, a thickness at an edge position of the defocusing apparatus is the same as a thickness at a central position of the defocusing apparatus, and a refractive index gradually decreases from the edge position to the central position.

In this possible implementation, the defocusing apparatus is an equivalent concave lens, and the first interface and the second interface of the equivalent concave lens are parallel to each other. In comparison with a defocusing apparatus such as a common concave lens, machining difficulty is reduced.

In a possible implementation of the second aspect, in the antenna apparatus, the defocusing apparatus includes different materials from the edge position to the central position, and refractive indices of the materials included from the edge position of the defocusing apparatus to the central position of the defocusing apparatus gradually decrease.

In this possible implementation, a specific implementation of the equivalent concave lens is provided, thereby improving implementability of the solution.

In a possible implementation of the second aspect, the defocusing apparatus includes a same material from the edge position to the central position, the material in the defocusing apparatus includes a hole, and density of the hole included in the material included from the edge position of the defocusing apparatus to the central position of the defocusing apparatus gradually decreases.

In this possible implementation, a specific implementation of the equivalent concave lens is provided, thereby improving implementability of the solution.

In a possible implementation of the second aspect, the defocusing apparatus includes a same material from the edge position to the central position, the material in the defocusing apparatus includes a hole, and an aperture of the hole included in the material included from the edge position of the defocusing apparatus to the central position of the defocusing apparatus gradually decreases.

In this possible implementation, a specific implementation of the equivalent concave lens is provided, thereby improving implementability of the solution.

In a possible implementation of the second aspect, the defocusing apparatus is a concave lens, the defocusing apparatus includes a same material from an edge position to a central position, and a thickness of the defocusing apparatus gradually decreases from the edge position to the central position.

In this possible implementation, a specific implementation of the equivalent concave lens is provided, thereby improving implementability of the solution.

In a possible implementation of the second aspect, the beam shaping panel is a convex lens, and the convex lens converges beams transmitted to the convex lens, and then transmits the beams to the peer antenna apparatus.

In this possible implementation, a specific implementation of the beam shaping panel is provided, thereby improving implementability of the solution.

In a possible implementation of the second aspect, the beam shaping panel is a paraboloid, and the paraboloid reflects a beam transmitted to the paraboloid to the peer antenna apparatus.

In this possible implementation, a specific implementation of the beam shaping panel is provided, thereby improving implementability of the solution.

It can be learned from the foregoing technical solutions that embodiments of this application have the following advantages:

In embodiments of this application, the feed converts a guided electromagnetic wave into a beam, and then sends the beam to the defocusing apparatus, and then the defocusing apparatus may change a transmission direction of the beam. In this way, the defocusing apparatus sends the beam whose transmission direction is changed to the beam shaping panel, and the beam shaping panel changes the transmission direction of the beam and a transmission shape of the beam, and then transmits the beam to the peer antenna, to implement information transmission. The defocusing apparatus changes the transmission direction of the beam, so that a spatial distance between feeds may be increased, feed arrangement density may be reduced, and a case in which physical positions of the feeds overlap may be avoided, to properly arrange the feeds and ensure a communication effect.

### BRIEF DESCRIPTION OF DRAWINGS

FIG. 1 is a schematic diagram of an application scenario of an antenna apparatus according to an embodiment of this application;
FIG. 2 is a schematic diagram of a structure of an antenna apparatus according to an embodiment of this application;
FIG. 3 is a schematic diagram of an embodiment of an antenna apparatus according to an embodiment of this application;
FIG. 4 is a schematic diagram of another embodiment of an antenna apparatus according to an embodiment of this application;
FIG. 5 is a schematic diagram of another embodiment of an antenna apparatus according to an embodiment of this application; and
FIG. 6 is a schematic diagram of another embodiment of an antenna apparatus according to an embodiment of this application.

### DESCRIPTION OF EMBODIMENTS

The following describes embodiments of this application with reference to the accompanying drawings. It is clear that the described embodiments are merely some but not all of embodiments of this application. A person of ordinary skill in the art may know that with technical development and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that the embodiments described herein can be implemented in an order other than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

In an actual application, in many cases, to ensure beam continuity, a device provider needs to reduce a distance between feeds. For example, in a microwave backhaul application scenario, communication is implemented between a station A and a station B by using a beam. In a normal working state of a microwave backhaul application, antenna beams of the station A and the station B are aligned. If the station shakes due to a factor such as instability of the station caused by wind blowing or the like, there is a mismatch of alignment between the antenna beams of the station A and the station B. A backhaul station features a high antenna gain and a small beam width, and therefore a relatively large gain loss may be caused if the station slightly shakes. A solution is to perform switching by using a switch and to generate a plurality of switchable beams in a small range, to ensure that when a station shakes, antenna beams are kept aligned by adjusting the beam. In this way, to ensure beam continuity, the device provider needs to reduce the distance between the feeds, to expand a selection range of a transmission direction of a beam.

Each feed needs to occupy specific physical space. When there is excessively high feed arrangement density, physical positions of the feeds overlap. Consequently, the feeds cannot be properly arranged, and a communication effect is affected.

For the foregoing problem that exists when an existing electronic device is reset, embodiments of this application provide an antenna apparatus, and the antenna apparatus includes a defocusing apparatus. The defocusing apparatus changes a transmission direction of a beam, so that a spatial distance between feeds may be increased, feed arrangement density may be reduced, and a case in which physical positions of the feeds overlap may be avoided, to properly arrange the feeds and ensure a communication effect.

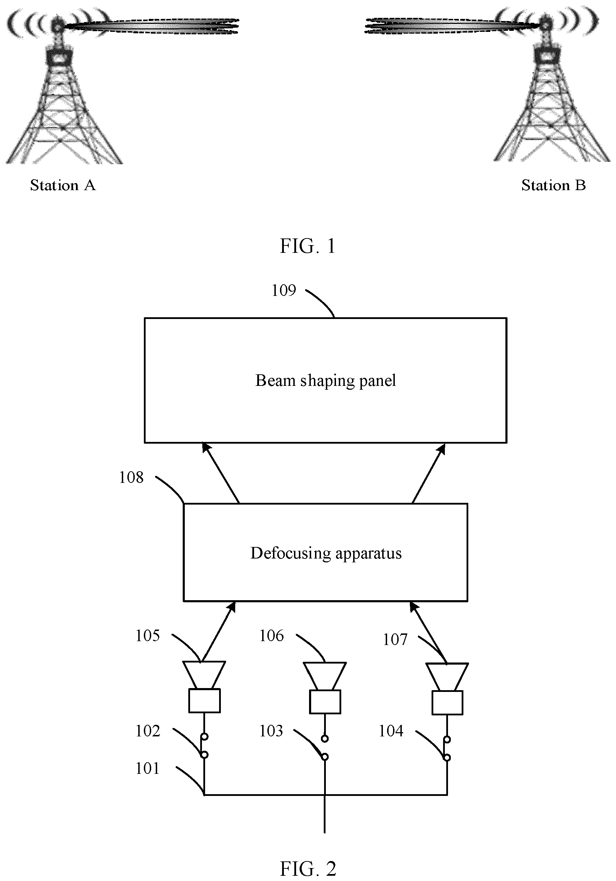

FIG. 1 is a schematic diagram of an application scenario of an antenna apparatus according to an embodiment of this application.

In this embodiment of this application, a station is a base station. The base station is a public mobile communications base station, is an interface device used for a mobile device to access Internet, is a form of a radio station, and refers to a radio transceiver station that transfers information to a mobile phone terminal by using a mobile communications switching center in a specific radio coverage area. Construction of the mobile communications base station is an important part of investment of a mobile communications operator. The construction of the mobile communications base station is usually performed around factors such as coverage, call quality, investment benefits, construction difficulty, and maintenance convenience.

The antenna apparatus provided in this embodiment of this application is installed on both a station A and a station B, and information is transferred between the stations by transmitting and receiving a beam by using the antenna apparatus provided in this embodiment of this application.

FIG. 2 is a schematic diagram of a structure of an antenna apparatus according to an embodiment of this application.

As shown in FIG. 2, the antenna apparatus provided in this embodiment of this application includes a power division network 101, a switch 102, a switch 103, a switch 104, a feed 105, a feed 106, a feed 107, a defocusing apparatus 108, and a beam shaping panel 109.

In this embodiment of this application, a first end of the power division network 101 is connected to a transceiver channel, and a second end is connected to a first end of each of the switch 102, the switch 103, and the switch 104.

A second end of the switch 102 is connected to the feed 105, a second end of the switch 103 is connected to the feed 106, and a second end of the switch 104 is connected to the feed 107.

The defocusing apparatus 108 is disposed between the beam shaping panel 109 and each of the feed 105, the feed 106, and the feed 107.

In this embodiment of this application, the power division network is a component of the antenna apparatus, and the power division network may be configured to transmit a guided electromagnetic wave to different feeds. The power division network and the switch jointly constitute a feed switching network. The feed switching network is a switching network that includes a single-stage or multi-stage switch and that is used to select a primary feed. When a switch connected to a feed is in an open state, for example, when the switch 103 in FIG. 2 is in the open state, the power division network 101 does not transmit the guided electromagnetic wave to the feed 106. Similarly, when a switch connected to a feed is in a closed state, for example, when the switch 102 and the switch 104 in FIG. 2 are in the closed state, the power division network 101 transmits the guided electromagnetic wave to the feed 105 and the feed 107.

The feed (feed) is a basic component of the antenna apparatus, and is a primary radiator of the antenna apparatus. One antenna apparatus may include a plurality of feeds. The feed can convert a high-frequency current or a bound electromagnetic wave into radiated electromagnetic wave energy. The radiated electromagnetic wave energy is a beam. Some antenna apparatuses may implement beam switching. The antenna apparatus may control, by using the switch, the feed that transmits a beam. When the switch is closed, the feed may transmit a beam. The beam may be used to transfer information.

The beam shaping panel is a device that changes a transmission direction of a beam and a transmission shape of the beam.

In this embodiment of this application, descriptions are provided by using only one power division network 101, three switches 102, 103, and 104, three feeds 105, 106, and 107, one defocusing apparatus 108, and one beam shaping panel 109 as examples. In an actual application, optionally, an application scenario of this embodiment of this application may include more or fewer power division networks, switches, feeds, defocusing apparatuses, and beam shaping panels. This is not specifically limited herein.

In this embodiment of this application, when the antenna apparatus transfers information to a peer antenna by transmitting a beam, a principle of transmitting a beam by the antenna apparatus is described in detail in the following embodiment.

In this embodiment of this application, the power division network is connected to the transceiver channel, and the transceiver channel may input a guided electromagnetic wave to the power division network. When a first switch is in the closed state, the guided electromagnetic wave is input to a first feed by using the power division network and the first switch. When the first switch is in the open state, the guided electromagnetic wave cannot be input to the first feed by using the first switch. In this way, the first switch may control the first feed to transmit or not to transmit a first beam.

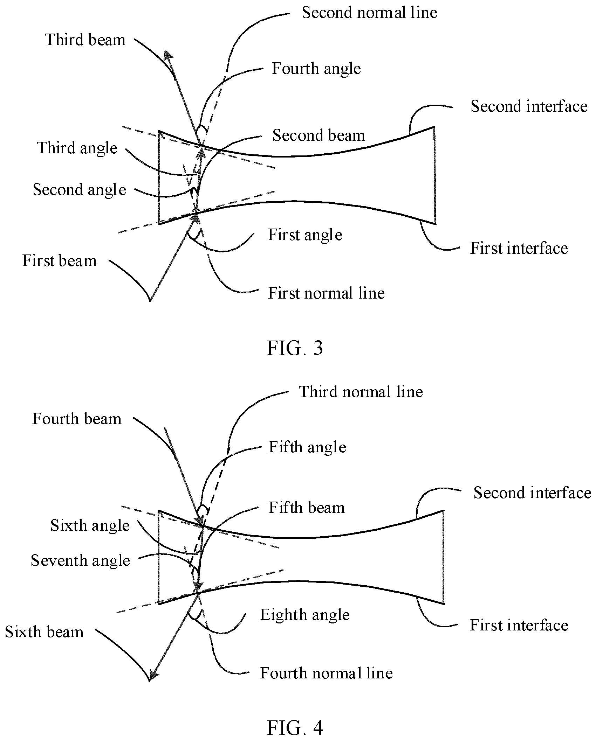

FIG. 3 is a schematic diagram of an embodiment of an antenna apparatus according to an embodiment of this application.

Referring to FIG. 3, after the guided electromagnetic wave is input to the first feed, the first feed outputs the first beam, the first beam is transmitted to a first interface, an intersection point of the first beam and the first interface is a first incident point, on the defocusing apparatus, a direction perpendicular to a tangential direction at the first incident point is a first normal direction, and an included angle between the first beam and the first normal direction is a first angle.

The defocusing apparatus includes the first interface and a second interface. In the defocusing apparatus, a side that is relatively close to the feed is the first interface, and a side that is relatively far away from the feed is the second interface. After the first beam is introduced into the first interface of the defocusing apparatus, a second beam appears in the defocusing apparatus because of refraction. An angle between the second beam and the first normal direction is a second angle. A refractive index inside the defocusing apparatus is greater than 1, and therefore the second angle is less than the first angle.

The second beam is transmitted to the second interface, an intersection point of the second beam and the second interface is a first radiation point, a direction perpendicular to a tangential direction at the first radiation point is a second normal direction, and an included angle between the second beam and the second normal direction is a third angle.

After the second beam is introduced into the second interface, the second beam passes through the second interface and is refracted to form a third beam. An included angle between the third beam and the second normal direction is a fourth angle. Similarly, it may be learned that the refractive index inside the defocusing apparatus is greater than 1, and therefore the third angle is less than the fourth angle.

The third beam is transmitted to the beam shaping panel, and the beam shaping panel changes a transmission direction of the third beam and a transmission shape of the beam, and then transmits the beam to the peer antenna, to implement information transmission.

In this embodiment of this application, when the antenna apparatus receives information by receiving a beam transmitted by the peer antenna, a principle of receiving a beam by the antenna apparatus is described in detail in the following embodiment.

In this embodiment of this application, when the beam shaping panel receives a fourth beam sent by the peer antenna apparatus, the beam shaping panel changes a transmission direction of the fourth beam, and the beam shaping panel transmits the fourth beam whose transmission direction and/or transmission shape are/is changed to the second interface.

FIG. 4 is a schematic diagram of an embodiment of an antenna apparatus according to an embodiment of this application.

Referring to FIG. 4, after the fourth beam is transmitted to the second interface, an intersection point of the fourth beam and the second interface is a second incident point, on the defocusing apparatus, a direction perpendicular to a tangential direction at the second incident point is a third normal direction, and an included angle between the fourth beam and the third normal direction is a fifth angle.

After the fourth beam is introduced into the second interface, a fifth beam appears in the defocusing apparatus because of refraction, and an included angle between the fifth beam and the third normal direction is a sixth angle. The refractive index inside the defocusing apparatus is greater than 1, and therefore the sixth angle is less than the fifth angle.

The fifth beam is transmitted to the first interface, an intersection point of the fifth beam and the first interface is a second radiation point, a direction perpendicular to a tangential direction at the second radiation point is a fourth normal direction, and an included angle between the fifth beam and the fourth normal direction is a seventh angle.

After the fifth beam is introduced into the first interface, the fifth beam passes through the first interface and is refracted to form a sixth beam, and an included angle between the sixth beam and the fourth normal direction is an eighth angle. Similarly, it may be learned that the refractive index inside the defocusing apparatus is greater than 1, and therefore the seventh angle is less than the eighth angle.

When the first switch is in the closed state, the sixth beam is transmitted to the feed, and after receiving the sixth beam, the feed converts the sixth beam into a guided electromagnetic wave, and transmits the guided electromagnetic wave to the power division network by using the first switch.

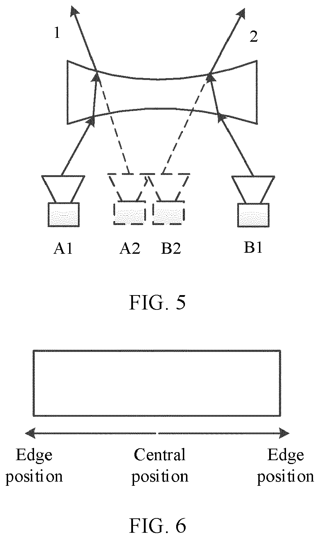

FIG. 5 is a schematic diagram of an embodiment of an antenna apparatus according to an embodiment of this application.

Referring to FIG. 5, the antenna apparatus provided in this embodiment of this application includes a defocusing apparatus. After a feed A1 transmits a beam, a beam 1 is obtained after the beam is refracted by the defocusing apparatus, and after a feed B1 transmits a beam, a beam 2 is obtained after the beam is refracted by the defocusing apparatus. When the antenna apparatus includes no defocusing apparatus, a beam 1 is obtained after a feed A2 transmits a beam, and a beam 2 is obtained after a feed B2 transmits a beam. A distance between A1 and B1 is greater than a distance between A2 and B2.

It may be learned from the foregoing descriptions that the defocusing apparatus changes a transmission direction of a beam, so that a spatial distance between feeds may be increased, feed arrangement density may be reduced, and a case in which physical positions of the feeds overlap may be avoided, to properly arrange the feeds and ensure a communication effect.

Optionally, in this embodiment, descriptions are provided by using the feed A1 and the feed B1 as examples. In an actual application, there may be more feeds than those in this embodiment. This is not specifically limited herein.

FIG. 6 is a schematic diagram of an embodiment of an antenna apparatus according to an embodiment of this application.

Referring to FIG. 6, in this embodiment of this application, the defocusing apparatus may be an equivalent concave lens. The first interface and the second interface of the defocusing apparatus are parallel to each other, and a thickness at an edge position of the defocusing apparatus is the same as a thickness at a central position of the defocusing apparatus. A refractive index of the defocusing apparatus gradually decreases from the edge position to the central position.

In this embodiment of this application, a refractive index of a material is in a positive correlation relationship with a dielectric constant of the material. Therefore, when dielectric constants of materials included in the defocusing apparatus from the edge position to the central position gradually decrease, refractive indices of the materials included from the edge position of the defocusing apparatus to the central position of the defocusing apparatus may gradually decrease.

Optionally, an implementation in which the refractive index of the defocusing apparatus gradually decreases from the edge position to the central position may be shown below. For example, a dielectric constant of a ceramic material is greater than that of a glass material. In this way, the edge position of the defocusing apparatus may be made of the ceramic material, and the central position of the defocusing apparatus may be made of the glass material. From the edge position to the central position of the defocusing apparatus, there may be a gradual transition from the ceramic material to the glass material. In this way, a dielectric constant of the defocusing apparatus may gradually decrease from the edge position to the central position, and therefore the refractive index of the defocusing apparatus may gradually decrease from the edge position to the central position.

Optionally, another implementation in which the refractive index of the defocusing apparatus gradually decreases from the edge position to the central position may be shown below. For example, the defocusing apparatus includes a same material from the edge position to the central position, and the material in the defocusing apparatus includes a hole. Higher density of the hole included in the material in the defocusing apparatus indicates a higher dielectric constant of this part of material and a higher refractive index of this part of material. In this way, when the density of the hole included in the material included from the edge position of the defocusing apparatus to the central position of the defocusing apparatus gradually decreases, the refractive index of the defocusing apparatus may gradually decrease from the edge position to the central position.

Optionally, an implementation in which the refractive index of the defocusing apparatus gradually decreases from the edge position to the central position may be shown below. For example, the defocusing apparatus includes a same material from the edge position to the central position, and the material in the defocusing apparatus includes a hole. A larger aperture of the hole included in the material in the defocusing apparatus indicates a higher dielectric constant of this part of material and a higher refractive index of this part of material. In this way, when the aperture of the hole included in the material included from the edge position of the defocusing apparatus to the central position of the defocusing apparatus gradually decreases, the refractive index of the defocusing apparatus may gradually decrease from the edge position to the central position.

Optionally, in this embodiment of this application, three implementations in which the refractive index of the defocusing apparatus gradually decreases from the edge position to the central position are provided. In addition to the three implementations in the foregoing embodiment, there may be further another implementation. This is not specifically limited herein.

In this embodiment of this application, the beam shaping panel in the foregoing embodiment has a plurality of specific implementations. The specific implementations are described in the following embodiments.

Optionally, the beam shaping panel provided in this embodiment of this application may be a convex lens, and the convex lens may converge beams transmitted to the convex lens, and then transmit the beams to the peer antenna apparatus.

Optionally, the beam shaping panel provided in this embodiment of this application may be a paraboloid, and the paraboloid reflects a beam transmitted to the paraboloid to the peer antenna apparatus.

Optionally, in this embodiment of this application, the beam shaping panel is described by using the convex lens and the paraboloid as examples. The beam shaping panel may be another type of beam shaping panel other than the convex lens and the paraboloid. This is not specifically limited herein.

## Claims

1. An antenna apparatus, comprising: a power division network, a first switch, a first feed, a defocusing apparatus, and a beam shaping panel, wherein the defocusing apparatus comprises a first interface and a second interface;
a first end of the power division network is connected to a transceiver channel, and a second end is connected to a first end of the first switch;
a second end of the first switch is connected to the first feed;
the defocusing apparatus is disposed between the first feed and the beam shaping panel;
inputting, by the transceiver channel, a guided electromagnetic wave to the power division network, and when the first switch is in a closed state, the guided electromagnetic wave is input to the first feed by using the power division network and the first switch;
after the guided electromagnetic wave is input to the first feed, outputting, by the first feed, a first beam, wherein the first beam is transmitted to the first interface, an intersection point of the first beam and the first interface is a first incident point, on the defocusing apparatus, a direction perpendicular to a tangential direction at the first incident point is a first normal direction, and an included angle between the first beam and the first normal direction is a first angle;
after the first beam is introduced into the first interface of the defocusing apparatus, a second beam appears in the defocusing apparatus because of refraction, an included angle between the second beam and the first normal direction is a second angle, and the second angle is less than the first angle;
the second beam is transmitted to the second interface, an intersection point of the second beam and the second interface is a first radiation point, a direction perpendicular to a tangential direction at the first radiation point is a second normal direction, and an included angle between the second beam and the second normal direction is a third angle;
after the second beam is introduced into the second interface, the second beam passes through the second interface and is refracted to form a third beam, an included angle between the third beam and the second normal direction is a fourth angle, and the third angle is less than the fourth angle; and
the third beam is transmitted to the beam shaping panel, and after changing a transmission direction of the third beam and a transmission shape of the beam, the beam shaping panel transmits the beam to a peer antenna, to implement information transmission.

2. An antenna apparatus, comprising: a power division network, a first switch, a first feed, a defocusing apparatus, and a beam shaping panel, wherein the defocusing apparatus comprises a first interface and a second interface;
a first end of the power division network is connected to a transceiver channel, and a second end is connected to a first end of the first switch;
a second end of the first switch is connected to the first feed;
the defocusing apparatus is disposed between the first feed and the beam shaping panel;
when the beam shaping panel receives a fourth beam sent by a peer antenna apparatus, the beam shaping panel changes a transmission direction of the fourth beam, and the beam shaping panel transmits the fourth beam to the second interface;
after the fourth beam is transmitted to the second interface, an intersection point of the fourth beam and the second interface is a second incident point, on the defocusing apparatus, a direction perpendicular to a tangential direction at the second incident point is a third normal direction, and an included angle between the fourth beam and the third normal direction is a fifth angle;
after the fourth beam is introduced into the second interface, a fifth beam appears in the defocusing apparatus because of refraction, an included angle between the fifth beam and the third normal direction is a sixth angle, and the sixth angle is less than the fifth angle;
the fifth beam is transmitted to the first interface, an intersection point of the fifth beam and the first interface is a second radiation point, a direction perpendicular to a tangential direction at the second radiation point is a fourth normal direction, and an included angle between the fifth beam and the fourth normal direction is a seventh angle;
after the fifth beam is introduced into the first interface, the fifth beam passes through the first interface and is refracted to form a sixth beam, an included angle between the sixth beam and the fourth normal direction is an eighth angle, and the seventh angle is less than the eighth angle; and
when the first switch is in a closed state, the sixth beam is transmitted to the feed, and after receiving the sixth beam, the feed converts the sixth beam into a guided electromagnetic wave, and transmits the guided electromagnetic wave to the power division network by using the first switch.

3. The antenna apparatus according to claim 1 or 2, wherein the defocusing apparatus is an equivalent concave lens, the first interface is parallel to the second interface, a thickness at an edge position of the defocusing apparatus is the same as a thickness at a central position of the defocusing apparatus, and a refractive index gradually decreases from the edge position to the central position.

4. The antenna apparatus according to claim 3, wherein the defocusing apparatus comprises different materials from the edge position to the central position, and refractive indices of the materials comprised from the edge position of the defocusing apparatus to the central position of the defocusing apparatus gradually decrease.

5. The antenna apparatus according to claim 3, wherein the defocusing apparatus comprises a same material from the edge position to the central position, the material in the defocusing apparatus comprises a hole, and density of the hole comprised in the material comprised from the edge position of the defocusing apparatus to the central position of the defocusing apparatus gradually decreases.

6. The antenna apparatus according to claim 3, wherein the defocusing apparatus comprises a same material from the edge position to the central position, the material in the defocusing apparatus comprises a hole, and an aperture of the hole comprised in the material comprised from the edge position of the defocusing apparatus to the central position of the defocusing apparatus gradually decreases.

7. The antenna apparatus according to claim 1 or 2, wherein the defocusing apparatus is a concave lens, the defocusing apparatus comprises a same material from an edge position to a central position, and a thickness of the defocusing apparatus gradually decreases from the edge position to the central position.

8. The antenna apparatus according to claim 1 or 2, wherein the beam shaping panel is a convex lens, and the convex lens converges beams transmitted to the convex lens, and then transmits the beams to the peer antenna apparatus.

9. The antenna apparatus according to claim 1 or 2, wherein the beam shaping panel is a paraboloid, and the paraboloid reflects a beam transmitted to the paraboloid to the peer antenna apparatus.
